# EUROPÄISCHE PATENTANMELDUNG

(11) **EP 1 277 931 A2**
(43) Veröffentlichungstag der Anmeldung: **22.01.2003**
(21) Anmeldenummer: 02015968.7
(22) Anmeldetag: 18.07.2002
(51) Int. Cl.: F01N 7/18, F01N 7/08

(54) **Verbindung einer Rohrleitung an einem Abgas-Gehäuseteil eines Kraftfahrzeuges**

(30) Priorität: 18.07.2001 DE 10133960
(71) Anmelder: J. Eberspächer GmbH & Co. KG, 73730 Esslingen (DE)
(72) Erfinder: Nording, Thomas, 73734 Esslingen (DE)

(57) **Zusammenfassung**

Bei einem Verfahren zur Herstellung einer Verbindung einer Rohrleitung 3 an einem Abgas-Gehäuseteil 2 eines Kraftfahrzeuges, insbesondere an einem Abgas-Schalldämpfer oder einem Abgas-Katalysator 1 eines Personenkraftfahrzeuges, bei dem ein Rohrende der Rohrleitung an einer Öffnung des Abgas-Gehäuseteils auf dem Umfang der Öffnung verschweißt wird, wird vorgeschlagen, daß in Vorfertigung der Rohrleitung 3 mit einem konstanten Durchmesser D2 vor einem Verschweißen das Rohrende 4 der Rohrleitung 3 vorzugsweise mittels Kalibrierdorn auf einen größeren Durchmesser D1 aufgeweitet und das aufgeweitete Rohrende mit dem größeren Durchmesser D1 anschließend an der entsprechend großen Öffnung 5 des Abgas-Gehäuseteils 2 verschweißt wird. Die Schweißnaht liegt dann in einem größeren Durchmesser D1, wodurch die Betriebsfestigkeit der Verbindungsstelle der Rohrleitung mit dem Abgas-Gehäuseteil 2 gesteigert wird.

## Beschreibung

Die Erfindung betrifft ein Verfahren zur Herstellung einer Verbindung einer Rohrleitung an einem Abgas-Gehäuseteil eines Kraftfahrzeuges, insbesondere an einem Abgas-Schalldämpfer oder einem Abgas-Katalysator eines Personenkraftfahrzeuges, wobei ein Rohrende der Rohrleitung an einer Öffnung des Abgas-Gehäuseteils auf dem Umfang der Öffnung verschweißt wird, sowie eine derartige Verbindung einer Rohrleitung an einem Abgas-Gehäuseteil selbst.

Abgasschalldämpfer und Abgaskatalysatoren mit auf der Abgas-Eingangsseite und auf der Abgas-Ausgangsseite angeschweißten Rohrleitungen zur Ausbildung einer Abgasanlage sind im Betrieb vergleichsweise großen Biegemomenten durch Schwingungen der Abgasanlage ausgesetzt, welche je nach Lage der Aufhängungsstellen der Abgasanlage an der Fahrzeugunterseite noch verstärkt werden können. Die Belastung des Bauteils durch die auftretenden großen Biegemomente verringert die Lebensdauer. Will man den größeren Biegemomenten begegnen, werden nach dem Stand der Technik aufwendige Maßnahmen ergriffen, wie z. B. Erhöhung der Trichter- und/oder Rohr-Wandstärke.

Aufgabe der Erfindung ist, ein Verfahren zur Herstellung einer Verbindung einer Rohrleitung an einem Abgas-Gehäuseteil der eingangs genannten Art bereitzustellen, welches mit einfachen Maßnahmen die Betriebsfestigkeit der Verbindung zwischen Rohrleitung und Abgas-Gehäuseteil erhöht.

Aufgabe der Erfindung ist ferner, eine einfache und gleichwohl verstärkte Verbindung einer Rohrleitung an einem Abgas-Gehäuseteil einzurichten.

Gelöst wird die der Erfindung zugrundeliegende Aufgabe durch ein Verfahren der im unabhängigen Anspruchs 1 angegebenen Art, vorteilhaft weitergebildet durch die Maßnahmen der Ansprüche 2 bis 7.

Eine erfindungsgemäße Verbindung zwischen einer Rohrleitung und einem angeschlossenen Abgas-Gehäuseteil kennzeichnet sich durch die Maßnahmen des Anspruchs 8, vorteilhaft weitergebildet durch die Maßnahmen der Ansprüche 9 bis 11.

Wesen des erfindungsgemäßen Verfahrens ist, daß das Rohrende der Rohrleitung vor einem Verschweißen insbesondere mittels eines Kalibrierdornes nennenswert aufgeweitet und das aufgeweitete Rohrende an der entsprechend großen Öffnung des Abgas-Gehäuseteils verschweißt wird.

Das aufgeweitete Rohrende der Rohrleitung wird vorzugsweise an der entsprechend großen Öffnung des Abgas-Gehäuseteils vor einem Verschweißen formschlüssig angesetzt.

Das an die Öffnung formschlüssig angesetzte, für ein Verschweißen positionierte Rohrende kann zusammen mit dem Abgas-Gehäuseteil für ein Verschweißen in einem Haltewerkzeug gehalten werden.

Vorzugsweise wird das aufgeweitete Rohrende vor einem Verschweißen in eine formschlüssige Steckverbindung mit der Öffnung des Abgas-Gehäuseteils gebracht. Dann wird eine Befestigung in einem Haltewerkzeug für den Verschweißvorgang entbehrlich.

Es hat sich gezeigt, daß es besonders vorteilhaft ist, wenn das Rohrende der Rohrleitung auf einen ca. 20 bis 30 Prozent größeren Durchmesser aufgeweitet wird. Dann lassen sich die Biegespannungen der Abgasanlage bis ca. 50 Prozent verringern.

Ist das Abgas-Gehäuseteil ein Abgastrichter, oder enthält das Abgas-Gehäuseteil einen Abgas-Trichter, dann kann je nach Größe der Aufweitung bzw. Vergrößerung des Durchmessers des Rohrendes der Rohrleitung die der Aufweitung entsprechend große Öffnung des Abgas-Trichters durch Verkürzen des Abgas-Trichters geschaffen werden.

Ein erfindungsgemäßes Abgas-Gehäuseteil mit angeschweißter Rohrleitung sieht also insbesondere eine aufgeweitetes Rohrende der Rohrleitung vor, welches vorzugsweise konisch oder zylindrisch ausgebildet und der Form des Umfangsrands der zu verschweißenden Öffnung des Abgas-Gehäuseteils angepaßt ist.

Abgas-Gehäuseteil und Rohrleitung können sich an der Schweißstelle in einer Steckverbindung befinden.

Durch die Erfindung wird bei größenmäßig vorgegebenen Bauteilen einer Abgasanlage eines Kraftfahrzeugs ein größerer Verschweißbereich eingerichtet bzw. eine längere Schweißnaht in einem größeren Durchmesser ermöglicht, wodurch dem kritischen Bereich der Anschlußstelle zwischen Rohrleitung und Abgas-Gehäuseteil im Vergleich zum Stand der Technik besser Rechnung getragen wird. Der Schweißbereich besitzt ein erhöhtes Widerstandsmoment, welches den Biegemomenten der Abgasanlage entgegen wirkt. Im Ergebnis wird die Belastung infolge von Biegemomenten durch Schwingungen der Abgasanlage im Betrieb verringert. Mit Vorteil kann die Lebensdauer des Bauteils gesteigert werden. Andere aufwendige Maßnahmen, wie z. B. Erhöhung der Trichter- und/oder Rohr-Wandstärke, können vermieden werden. Als zusätzlicher Nutzen ergibt sich, daß insbesondere der Trichter eines Katalysator-Gehäuses oder dergleichen verkürzt werden kann, was eine erhebliche Verbesserung der fertigungstechnischen Machbarkeit im Einzelfall bedeutet.

Die Erfindung ist grundsätzlich an Verbindungen von Rohren zu Boxen bzw. Elementen anwendbar, die einen Durchmessersprung erzeugen.

Die Erfindung wird nachfolgend anhand von Ausführungsbeispielen unter Bezugnahme auf die beigefügten Zeichnungen näher erläutert; es zeigen:
- Figur 1: einen Abgas-Katalysator mit geradem Abgas-Trichter und angeschweißter Rohrleitung in einem konischen Steckbereich in einer schematischen Draufsicht,
- Figur 2: den Abgas-Katalysator nach Figur 1 ohne Rohrleitung schematisch in einem Axialschnitt,
- Figur 3: den Abgas-Katalysator mit angeschlossener Rohrleitung in einem Axialschnitt A-A gemäß Figur 1,
- Figur 4: die Darstellung nach Figur 3 in einer Vergrößerung, und
- Figur 5: einen anderen Abgas-Katalysator mit schrägem Abgas-Trichter und angeschlossener Rohrleitung in einem zylindrischen Steckbereich in einem schematischen Axialschnitt ähnlich Figur 4.

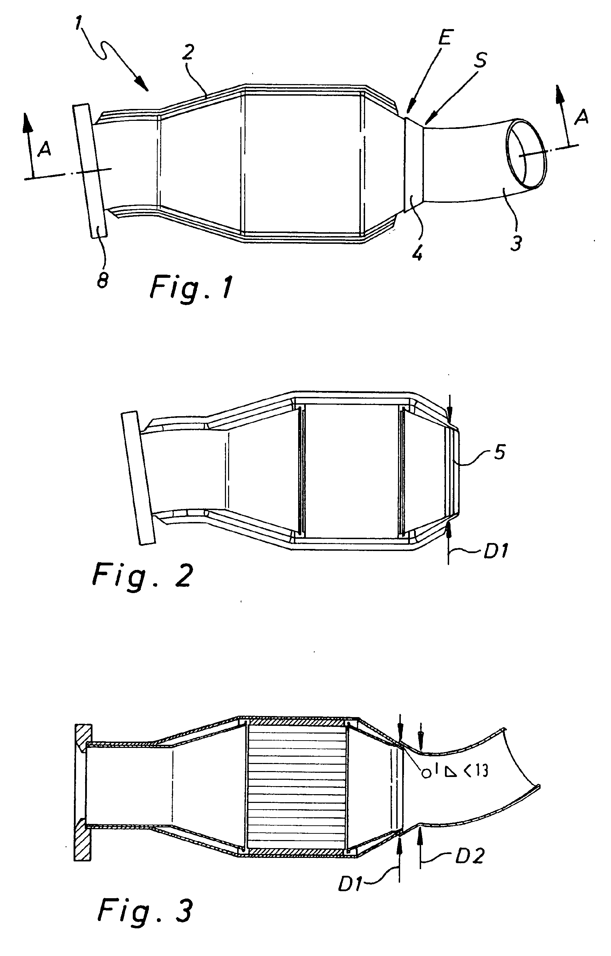

In den Figuren 1 bis 4 ist ein Abgas-Katalysator 1 eines Personenkraftfahrzeuges dargestellt.

Der Abgas-Katalysator 1 besitzt ein Abgas-Gehäuseteil 2, in dessen Innern das eigentliche Katalysator-Element abgestützt ist.

Das Abgas-Gehäuseteil 2 umfaßt an der gemäß Zeichnung linken Abgas-Eingangsseite einen angeschweißten Radialflansch 8 für eine Befestigung einer hier nicht dargestellten Rohrleitung, welche zum Motorblock eines Kraftfahrzeugs führt.

An der gemäß Zeichnung rechten Abgas-Ausgangsseite besitzt das Abgas-Gehäuseteil 2 einen Abgas-Trichter 7 mit einer im Querschnitt kreisrunden Öffnung 5. Der Außenumfangsrand der Öffnung 5 weist einen konischen Paß-Sitz mit einem Durchmesser D1 für ein konisch aufgeweitetes Rohrende 4 einer Rohrleitung 3 auf, welche auf der Abgas-Austrittsseite zur Atmosphäre führt.

Während die Rohrleitung 3 insgesamt einen gekrümmten Verlauf besitzt, verläuft das Rohrende 4, welches aufgeweitet ist, geradlinig, d. h. die Achse des aufgeweiteten konischen Rohrendes 4 fluchtet mit der Axialachse des Abgas-Katalysators 1 bzw. des Abgas-Gehäuseteils 2, wie dies am besten der Figur 1 zu entnehmen ist.

Die Konizität des aufgeweiteten Rohrendes 4 entspricht der Konizität des Abgas-Trichters 7.

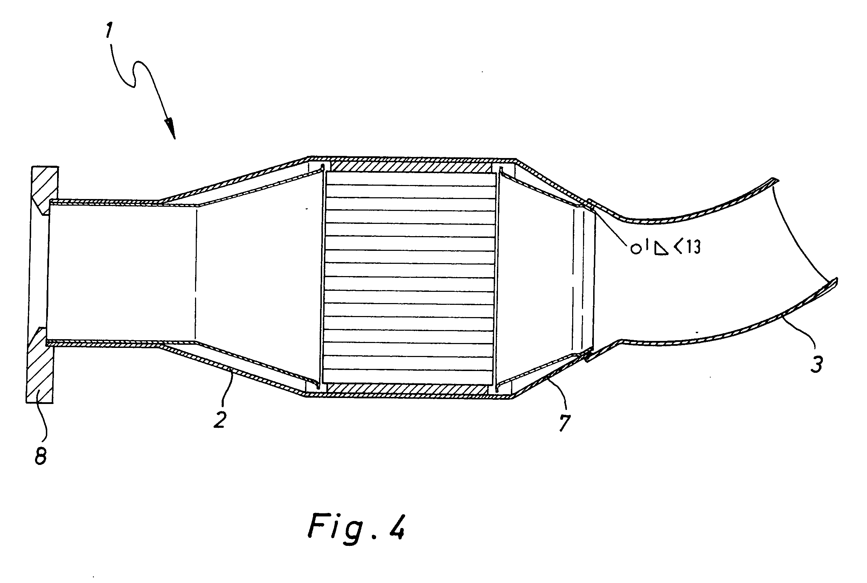

Das vorderste gemäß den Zeichnungen linke Ende des Rohrendes 4 der Rohrleitung 3 ist auf dem Außenumfang und auf dem Innenumfang mit dem konischen Außenumfangsrand der Öffnung 5 des Abgas-Gehäuseteils 2 verschweißt, wie dies am besten der Figur 4 durch die Symboldarstellung im Innern an der Rohrleitung 3 zu entnehmen ist.

Für eine Montage einer Abgasanlage wird unter anderem der vorgefertigte Abgas-Katalysator 1 mit einer vorgefertigten Rohrleitung 3 auf dem Außenumfangsrand der Öffnung 5 des Abgas-Gehäuseteils 2 verschweißt.

Das Wesen der vorliegenden Erfindung E gemäß Figur 1 besteht nun darin, in Vorfertigung der Rohrleitung 3, welche durchgehend einen lichten konstanten Innendurchmesser D2 aufweist, beim Rohrende 4 aufzuweiten, um einen größeren Innendurchmesser D1 am äußersten linken Ende der Rohrleitung 3 auszubilden, welches mit dem Außenumfangsrand 5 des Abgas-Gehäuseteils 2 verschweißt wird. Die Aufweitung erfolgt in an sich bekannter Weise vorzugsweise mittels Kalibrierdorn als Aufweitungswerkzeug, welcher ein konisches Ende besitzt.

Vorzugsweise wird das Rohrende 4 der Rohrleitung 3 in seinem Durchmesser von ca. 20 bis 30 Prozent von D2 auf D1 aufgeweitet. Im Ausführungsbeispiel der Figuren 1 bis 4 beträgt die Aufweitung 20%, d.h. D1 = 1,2 x D2.

Auf diese Weise wird eine Schweißnaht mit einem großen Durchmesser D1 geschaffen, wodurch die Belastung infolge von Biegemomenten durch Schwingungen der Abgasanlage sinkt.

Nach dem Stand der Technik gemäß Figur 1 ist das nicht aufgeweitete Rohrende der Rohrleitung 3 bei S mit dem dann längeren Abgas-Trichter 7 des Abgas-Katalysators 1 verschweißt und besitzt mithin eine kürzere Schweißnaht.

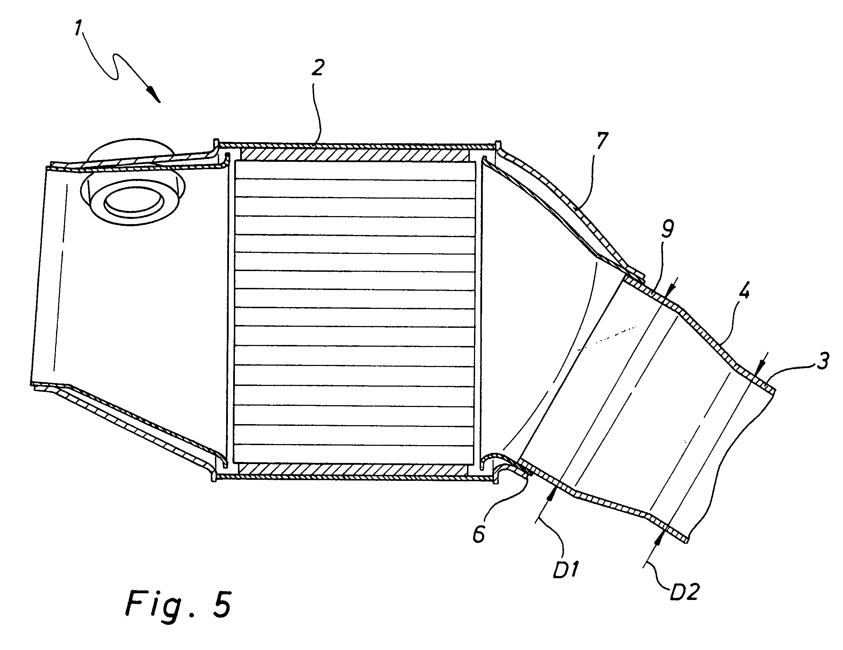

Gemäß Figur 5 ist ein schräger Abgastrichter 7 eines Abgas-Katalysators 1 eines Personenkraftfahrzeuges endseitig mit einer Rohrleitung 3 verschweißt, welche ebenfalls ein konisch aufgeweitetes Rohrende 4 und im Anschluß hieran einen zylindrischen Endabschnitts 9 besitzt. Der zylindrische Endabschnitt 9 mit dem konstanten von D2 auf D1 aufgeweiteten Innendurchmesser D1 befindet sich in einer Steckverbindung auf dem kreisrunden Innenumfang der Austrittsöffnung 5, welche ebenfalls den Durchmesser D1 besitzt. Die Aufweitung der Ausführungsvariante nach Figur 5 beträgt ebenfalls 20 Prozent und erfolgt ebenfalls mittels Kalibrierdorn wie die Ausführungsvariante nach den Figuren 1 bis 4 in einer Vorfertigung der Rohrleitung 3 vor einem Verschweißen mit dem Abgas-Gehäuseteil 2 bzw. dem Abgas-Trichter 7.

## Patentansprüche

1. Verfahren zur Herstellung einer Verbindung einer Rohrleitung (3) an einem Abgas-Gehäuseteil (2) eines Kraftfahrzeuges, insbesondere an einem Abgas-Schalldämpfer oder einem Abgas-Katalysator (1) eines Personenkraftfahrzeuges, wobei ein Rohrende (4) der Rohrleitung an einer Öffnung des Abgas-Gehäuseteils auf dem Umfang der Öffnung verschweißt wird,
**dadurch gekennzeichnet,**
**daß** das Rohrende (4) der Rohrleitung (3) vor einem Verschweißen aufgeweitet und das aufgeweitete Rohrende an der entsprechend großen Öffnung (5) des Abgas-Gehäuseteils (2) verschweißt wird.

2. Verfahren nach Anspruch 1,
**dadurch gekennzeichnet,**
**daß** das Rohrende (4) mittels Kalibrierdorn aufgeweitet wird.

3. Verfahren nach Anspruch 1 oder 2,
**dadurch gekennzeichnet,**
**daß** das aufgeweitete Rohrende (4) der Rohrleitung (3) an der entsprechend großen Öffnung (5) des Abgas-Gehäuseteils vor einem Verschweißen formschlüssig angesetzt wird.

4. Verfahren nach Anspruch 3,
**dadurch gekennzeichnet,**
**daß** das an die Öffnung formschlüssig angesetzte, für ein Verschweißen positionierte Rohrende (4) zusammen mit dem Abgas-Gehäuseteil (2) für ein Verschweißen in einem Haltewerkzeug gehalten wird.

5. Verfahren nach Anspruch 3 oder 4,
**dadurch gekennzeichnet,**
**daß** das aufgeweitete Rohrende (4) vor einem Verschweißen in eine formschlüssige Steckverbindung (6) mit der Öffnung (5) des Abgas-Gehäuseteils (2) gebracht wird.

6. Verfahren nach einem der Ansprüche 1 bis 5,
**dadurch gekennzeichnet,**
**daß** das Rohrende (4) der Rohrleitung (3) auf einen ca. 20 bis 30 Prozent größeren Durchmesser (D1) aufgeweitet wird.

7. Verfahren nach einem der Ansprüche 1 bis 6,
**dadurch gekennzeichnet,**
**daß** die entsprechend große Öffnung (5) eines Abgas-Gehäuseteils (2) in Form eines Abgas-Trichters (7) durch Verkürzen des Abgas-Trichters geschaffen wird.

8. Abgas-Gehäuseteil mit angeschweißter Rohrleitung, insbesondere gefertigt nach einem der Ansprüche 1 bis 7, **dadurch gekennzeichnet,**
**daß** das angeschweißte Rohrende (4) der Rohrleitung (3) aufgeweitet ist.

9. Abgas-Gehäuseteil mit angeschweißter Rohrleitung nach Anspruch 8,
**dadurch gekennzeichnet,**
**daß** das Abgas-Gehäuseteil (2) ein Abgas-Trichter ist oder einen Abgas-Trichter (7) umfaßt, wobei das mit dem Abgas-Trichter (7) verschweißte Rohrende (4) konisch ausgebildet und der Konizität des Abgas-Trichters (7) angepaßt ist.

10. Abgas-Gehäuseteil mit angeschweißter Rohrleitung nach Anspruch 8,
**dadurch gekennzeichnet,**
**daß** eine verschweißte Steckverbindung (6) zwischen Rohrleitung (3) und Abgas-Gehäuseteil (2) vorgesehen ist.

11. Abgas-Gehäuseteil mit angeschweißter Rohrleitung nach Anspruch 10,
**dadurch gekennzeichnet,**
**daß** die Steckverbindung (6) zylindrisch ausgebildet ist.
